# FASCICULE DE BREVET EUROPEEN

(11) **EP 2 561 942 B1**
(45) Date de publication et mention de la délivrance du brevet: **25.02.2015**
(21) Numéro de dépôt: 11178693.5
(22) Date de dépôt: 24.08.2011
(51) Int. Cl.: B23B 31/20, B23B 31/30

(54) **Canon ajustable**
Justierbares Spannfutter
Adjustable collet chuck

(43) Date de publication de la demande: 27.02.2013
(73) Titulaire: Tornos SA, 2740 Moutier (CH)
(72) Inventeur: Hoffmeyer, Romain, 2822 Courroux (CH)
(74) Mandataire: Scheuzger, Beat Otto

(56) Documents cités:
- CH-A2- 702 797
- US-A1- 2007 137 322
- US-A1- 2008 282 878

## Description

L'invention se rapporte à un canon ajustable qui peut être utilisé avec des machines-outils ou être intégré dans une machine-outil. Plus particulièrement, l'invention se rapporte à un perfectionnement d'un canon adapté à des barres de diamètres variables.

Les canons de guidage utilisés dans les machines-outils permettent de guider librement, essentiellement sans jeu radial, la matière à usiner. Celle-ci se présente généralement sous forme d'une barre. Les canons sont généralement agencés de manière à ce qu'ils permettent la rotation de la barre. Des moyens de guidage ou serrage, telle qu'une pince, sont fournis pour pouvoir guider la barre ou serrer/desserrer la barre dépendant du mode de fonctionnement souhaité. On peut, par exemple, contrôler le fonctionnement de la pince par un piston pneumatique.

Ces canons ont en principe trois modes de fonctionnement. Dans le mode guidé ou ajusté le canon s'ajuste au diamètre de la barre. La barre est « guidée » radialement mais peut coulisser axialement. La position ajustée s'obtient par réglage de la pression qui peut être, par exemple, dans ce mode de fonctionnement autour de 3 bars.

Dans un mode serré, la pince permet de maintenir la barre de manière rigide et confère ainsi une meilleure stabilité pour des opérations de tronçonnage ou de fraisage. La barre est « bloquée » dans la pince. En principe, elle ne peut pas coulisser axialement ou alors difficilement. La position serrée s'obtient avec une pression maximum, qui est usuelle dans l'industrie mécanique autour de 6 bars.

Dans le mode ouvert la pince est dans une position ouverte qui facilite l'extraction de la chute et favorise l'introduction d'une nouvelle barre. La position ouverte s'obtient avec une pression inverse sur le piston.

Si on utilise des barres de moins bonne qualité, le diamètre extérieur de la barre n'est pas toujours tout à fait constant. Cela peut poser un problème surtout dans le mode guidé et surtout si la pince est ajustée au moyen d'un système à écrou. Dans ce cas là la barre peut rester bloquée dans la pince en cas de bosse sur la barre ou alors flotter en cas de creux dans la barre. Ce problème peut être mitigé si on utilise une pince en combinaison avec un piston pneumatique qui est moins sensible aux variations sporadiques du diamètre de la barre.

L'encombrement disponible dans la machine-outil pose des contraintes pour les dimensions de canon et par conséquent pour le diamètre de la barre qui peut être guidée. L'encombrement disponible pour l'intégration (et la construction) de ces canons auto-ajustables est donné par les machines existantes et ne peut pas être modifié. Des canons connus avec une pince à large spectre d'ouverture permettent de serrer des barres dont le diamètre peut varier de ±0,25 mm et qui ont un diamètre de serrage maximum = 25,4 mm.

Le document US 2008/0282878 décrit un canon ajustable selon le préambule de la revendication 1.

Actuellement il n'y a pas de solution pour un canon auto-ajustable adapté à une barre de diamètre plus grand qu'un pouce, et qui se loge dans l'encombrement disponible. Un piston pneumatique standard (circulaire) serait de section insuffisante pour obtenir les forces de fonctionnement nécessaires. Une variante hydraulique est réalisable mais comporte plusieurs inconvénients (prix du groupe hydraulique, montage/démontage du système, purge des conduites, etc.).

L'objet de la présente invention est de surmonter les problèmes des solutions connues. La présente invention propose donc une solution pour un canon qui permet de guider des barres de diamètre plus large que jusqu'à présent et ceci dans l'encombrement donné comme expliqué plus en détail plus loin.

A cet effet, l'invention a pour objet un canon ajustable pour guider une matière à usiner le long de l'axe longitudinal du canon, le canon comprend :
- un corps principal ;
- une pince située au moins partiellement dans le corps principal pour serrer et/ou desserrer la matière ; et
- un piston pneumatique situé au moins partiellement dans le corps principal, pour serrer et/ou desserrer pneumatiquement la matière dans la pince, le piston comprenant une base et une paroi s'étendant radialement de la base, la paroi séparant transversalement, par rapport à l'axe longitudinal du canon, deux chambres situées axialement dans le canon, les pressions dans les deux chambres sont utilisées pour opérer la pince,
caractérisé en ce que la paroi est de forme à plusieurs lobes de telle manière que l'épaisseur radiale de la paroi, dans un plan perpendiculaire par rapport à l'axe longitudinal, n'est pas constante.

En utilisant ce type de canon on obtient une solution qui permet d'opérer avec des barres de qualité inférieure (barres moins chères). La solution permet d'augmenter la surface du piston, générant ainsi, avec une pression pneumatique usuelle, une force axiale de serrage suffisante dans un encombrement limité en dimensions. La solution proposée permet donc d'augmenter la force de serrage dans un encombrement réduit ou limité. Autrement dit, on augmente la surface où la pression peut être appliquée. La présente invention permet d'avoir un rapport compacité-force de serrage supérieur.

Pour obtenir le résultat souhaité, le nombre des lobes est au minimum de deux.

Selon l'invention, aucun groupe hydraulique n'est utilisé pour contrôler l'opération de la pince. La solution proposée est opérationnelle dans un encombrement réduit et en utilisant des machines-outils déjà sur le marché on peut opérer avec des barres de diamètre jusqu'à 32 mm. La solution garantit des forces de serrage importantes et adaptées aux diamètres plus larges que les solutions connues. De plus, le montage/démontage est simple sur la machine et également sur les machines déjà livrées. En outre, le prix de réalisation est très compétitif.

Les autres aspects de la présente invention se trouvent dans les revendications dépendantes.

L'invention sera bien comprise à la lecture de la description ci-après faite à titre d'exemple non limitatif en regardant les dessins ci-annexés qui représentent schématiquement :
- figure 1 : vue de coupe simplifiée, canon ajustable selon un mode de réalisation de la présente invention,
- figure 2 : en perspective, un piston simplifié de forme à plusieurs lobes, selon un mode de réalisation de la présente invention, et
- figure 3 : en perspective, le corps principal du canon de la figure 1 selon un mode de réalisation de la présente invention.

En se reportant aux dessins, un mode de réalisation non limitatif d'un canon ajustable ou réglable conformément à la présente invention est maintenant expliqué plus en détail.

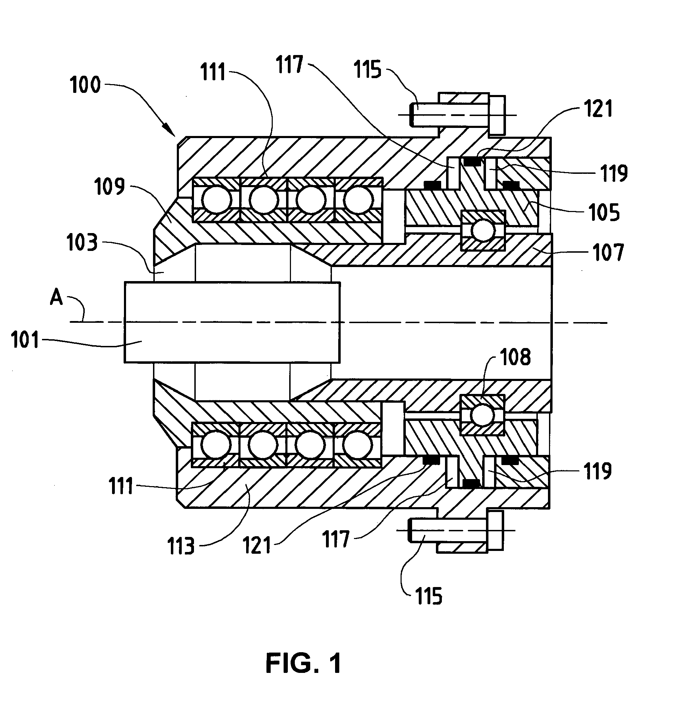

La figure 1 représente une vue en coupe d'un canon 100 ajustable simplifié selon ce mode de réalisation. Pour guider axialement (la ligne pointillée A sur la figure) ou serrer/desserrer la barre 101, le canon est muni d'une pince 103 à une extrémité du canon 100. La pince 103 est dans cet exemple une pince biconique. L'opération de la pince est contrôlée par un piston 105. Pour obtenir une structure simple et une opération fiable, ce piston fonctionne d'une manière pneumatique. Avec un piston pneumatique, on peut donc éviter les purges des chambres et conduites qui seraient indispensables avec un système hydraulique. Une pièce intermédiaire 107 relie le piston 105 et la pince 103 pour que la pince puisse être contrôlée par le piston 105. La pièce intermédiaire 107 est reliée au piston 105 par un roulement à billes 108. La pièce intermédiaire 107 peut alors bouger axialement en fonction de la position du piston 105 pour faire serrer ou desserrer la pince 103.

Le piston pneumatique 105 permet donc régler le niveau de serrage de la pince 103 de façon simple et précise par variation de la pression dans un circuit pneumatique. Le réglage de la pression est fait dans cet exemple par un circuit de commande pneumatique tel que connu dans le domaine et peut prévoir les trois modes d'opération, notamment, le mode guidé, le mode serré et le mode ouvert.

Le canon comprend aussi une broche 109 qui est sur la figure 1 autour de la pince 103. Sur la figure on voit également des roulements à billes 111. Ces roulements à billes 111 permettent la rotation de la pince 103, de la broche 109 et de la pièce intermédiaire 107 autour de l'axe longitudinal A, limitant en même temps le déplacement axial de ces éléments. La partie extérieure de ce canon forme un fourreau 113. Des moyens de fixation 115, telles que des vis, sont fournis pour fixer le canon 100 à la machine.

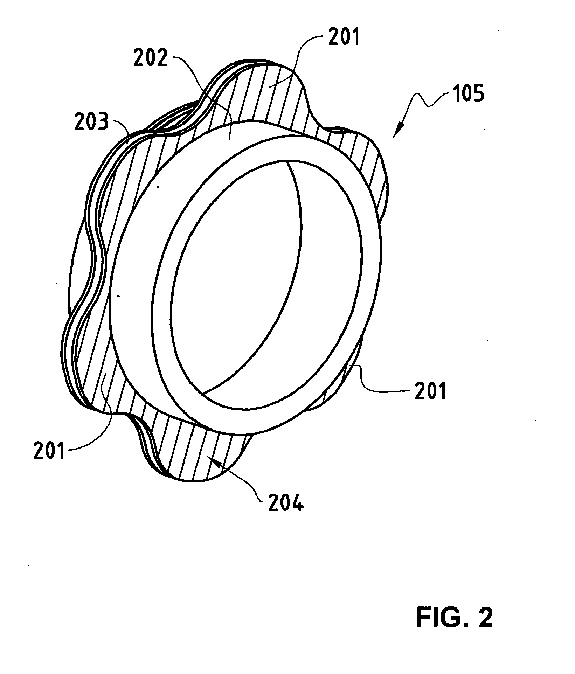

Le piston 105 que l'on voit mieux sur la figure 2 est un piston de forme à plusieurs lobes 201. Ce piston comprend une base 202 annulaire d'où les lobes 201 font saillies radialement. Ce piston 105 peut exercer une force dans l'une ou l'autre direction axiale, en fonction de la surpression existante dans une des chambres 117 ; 119 (illustré sur la figure 1) par rapport à l'autre. Chacune de ces chambres est reliée par une conduite (non illustrée) à un circuit pneumatique (non illustré) pour produire les pressions nécessaires. Ce circuit pneumatique peut être commandé par un circuit électrique à commande numérique.

Le piston 105 comprend donc une paroi 204 séparatrice transversale par rapport à l'axe longitudinal du canon 100 pour séparer les deux chambres 117 ; 119 situées axialement dans le canon 100. L'épaisseur radiale (ou bien longueur radiale) de cette paroi 204 séparatrice, dans un plan perpendiculaire par rapport à l'axe A longitudinal, n'est donc pas constante. Dans ce plan perpendiculaire à l'axe A, la paroi séparatrice 204 comprend donc des sommets formés par les lobes 201 et des fonds. Les fonds atteignent presque la surface de la base 202. Pour donner un exemple des valeurs possibles, selon la présente invention, les sommets des lobes 201 s'étendent radialement d'environ 12mm de la base 202 alors que les fonds s'étendent radialement seulement d'environ 2mm de la base 202. Par exemple, dans la direction radiale (perpendiculaire à la direction axiale), les extrémités des surfaces latérales de la paroi 204 opposant les chambres 117 ; 119 comprennent plusieurs saillies et les extrémités des surfaces latérales de la paroi 204 ont donc une forme à plusieurs lobes. On pourrait même définir un rapport (une condition que le piston doit remplir) entre les valeurs suivantes : (1) la distance entre la surface de la base 202 et le sommet d'un lobe d'un côté ; et (2) la distance entre la surface de la base 202 et le fond d'un lobe de l'autre côté. Selon la présente invention ce rapport se situe typiquement entre 4 et 10. Donc, vu du côté où se trouve la chambre 117 ou la chambre 119, la paroi 204 séparatrice a donc plusieurs lobes 201 pour augmenter la surface où la pression peut être appliquée.

Des joints d'étanchéité 121 (du type dit « O ring » par exemple) placés dans des rainures 203 ou gorges correspondantes du piston, respectivement du fourreau 113, assurent l'étanchéité des chambres 117 ; 119. On pourrait mettre un point de graisse et/ou de colle à chaque sommet et fond de gorge 203 pour retenir le joint lors du montage.

En se référant encore à la figure 1, on voit facilement que selon les pressions transmises par les conduites aux chambres 117 ; 119, l'ensemble formé par le piston 105 et de la pièce intermédiaire 107 sera poussé soit vers la gauche soit vers la droite (le piston bouge le long de l'axe longitudinal A). Dans le premier cas, la pince 103 est serrée, tant que dans le deuxième cas la pince 103 est desserrée.

L'objectif de ce type de piston 105 de forme à lobes est d'augmenter les surfaces (s) radiales (transversal par rapport à l'axe de rotation A) des chambres 117 ; 119 formées par le piston 105. Cette surface est illustrée sur la figure 2 par des hachures. La force (f) pour serrer la pince 103 est égale à la pression (p) appliquée aux chambres 117 ; 119 par le circuit pneumatique externe multiplié par la surface (s), c'est-à-dire : *f* = *p* · *s*.

Grâce au développement d'un piston 105 de forme à plusieurs lobes, il est possible de proposer une solution pneumatique pour une barre (et une pince biconique) de diamètre à 32 mm, ayant une force suffisante dans un encombrement limité. Les courbes du piston 105 ont des formes étudiées pour l'utilisation de joints d'étanchéité 121 standards du commerce.

On remarquera également que la figure 1 schématique simplifiée ne comprend pas certains détails évidents pour l'homme du métier, telle que l'existence d'un couvercle démontable à l'extrémité droite de canon 100 pour engager le piston 105 dans le fourreau 113 lors du montage.

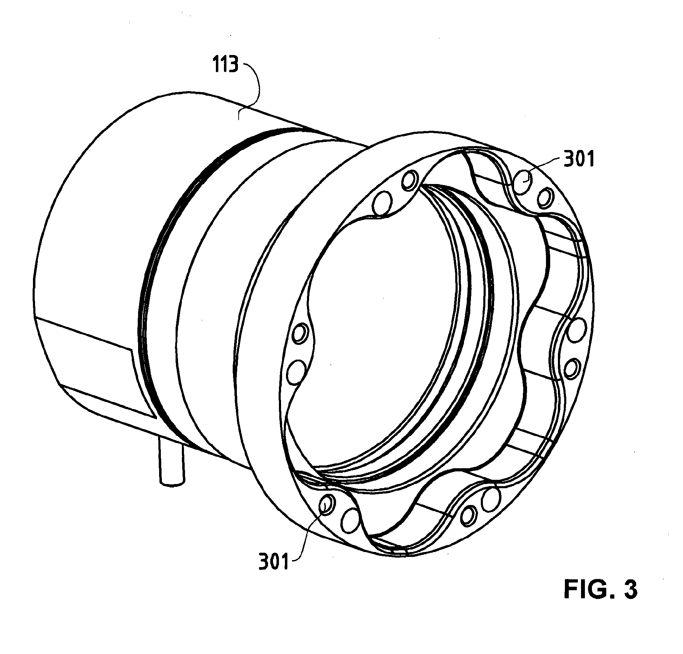

Sur la figure 3 on voit en perspective le fourreau 113 ou le corps principal du canon 100. La partie extrême droite de ce fourreau est agencée pour loger le piston 105 illustré sur la figure 2. Dans cet exemple le piston comprend 6 lobes. Le nombre et la largeur des lobes dépendent du nombre et de la position des moyens de fixation 115. Donc, en état de fonctionnement, le piston 105 est au moins partiellement logé dans le canon 100. Dans cet exemple il y a 12 trous 301 pour accompagner les moyens de fixation 115. Les trous sont présentés par paires et les lobes 201 se trouvent alors entre les paires des trous 301 de manière que, mesuré à partir de l'axe A longitudinal, les lobes 201 (ou bien les sommets des lobes) s'étendent radialement au moins au même niveau où se trouve les trous 301 pour recevoir les moyens de fixation 115. Dans l'exemple illustré, les lobes s'étendent radialement plus loin de l'axe A longitudinal que le niveau radial où se trouve les trous 301 pour recevoir les moyens de fixation 115. L'un des trous 301 de chaque paire est pour fixer le canon à la machine et l'autre trou 301 est pour fixer le couvercle (non représenté par les figures) du canon 100.

On pourrait aussi envisager plusieurs variations dans la configuration expliquée ci-dessus sans sortir du cadre de la présente invention. On pourrait par exemple mettre tous les joints d'étanchéité 121 sur le piston 105 au lieu d'avoir des joints d'étanchéité 121 sur le fourreau 113 du canon 100 même. Bien que représenté sur les figures en tant que des formes arrondies et saillantes, on peut également considérer des lobes 201 de formes carrées, triangulaires, ou autres. Par exemple les formes carrées pourraient être plus simples à usiner et donc moins chères à préparer. Le nombre de lobes pourrait également être réduit ou augmenté en fonction du nombre de moyens de fixation 301. Aussi la base 202 et la paroi 204 peuvent être manufacturées séparément et peuvent donc être deux pièces différentes. Alternativement le piston 105 peut être un monobloc. On pourrait aussi envisager une solution où les lobes ne s'étendent pas tous au même niveau radial à partir de l'axe A longitudinal du piston 105. Ainsi, la forme et/ou le nombre des lobes 201 peut/peuvent dépendre du nombre et/ou de l'emplacement des trous 301.

## Revendications

1. Un canon (100) ajustable pour guider une matière (101) à usiner le long d'un axe (A) longitudinal du canon (100), le canon (100) comprend :
• un corps principal (113) ;
• une pince (103) située au moins partiellement dans le corps principal (113) pour serrer et/ou desserrer la matière (101) ; et
• un piston (105) pneumatique situé au moins partiellement dans le corps principal (113), pour serrer et/ou desserrer pneumatiquement la matière (101) dans la pince (103), le piston (105) comprenant une base (202) et une paroi (204) s'étendant radialement de la base (202), la paroi (204) séparant transversalement, par rapport à l'axe (A) longitudinal du canon (100), deux chambres (117 ; 119) situées axialement dans le canon (100), les pressions dans les deux chambres sont utilisées pour opérer la pince (103),
**caractérisé en ce que** la paroi (204) est de forme à plusieurs lobes (201) de manière que l'épaisseur radiale de la paroi (204), dans un plan perpendiculaire par rapport à l'axe longitudinal, n'est pas constante.

2. Le canon (100) selon la revendication 1, dans lequel la pince (103) est de forme biconique.

3. Le canon (100) selon l'une des quelconques revendications précédentes, dans lequel le piston (105) est connecté à la pince (103) au moyen d'une pièce intermédiaire (107).

4. Le canon (100) selon l'une des quelconques revendications précédentes, dans lequel un côté du canon (100) comprend des trous (301) pour recevoir des moyens de fixation (115), et dans lequel les lobes (201) sont agencés pour se trouver entre les trous (301) de manière que les lobes (201) s'étendent radialement à partir de l'axe (A) longitudinal au moins au niveau où se trouve les trous (301).

5. Le canon (100) selon l'une des revendications 1-3, dans lequel un côté du canon (100) comprend des trous (301) pour recevoir des moyens de fixation (115), et dans lequel les lobes (201) sont agencés pour se trouver entre deux paires de trous (301) de manière que les lobes (201) s'étendent radialement à partir de l'axe (A) longitudinal au moins au niveau où se trouve les trous (301).

6. Le canon (100) selon l'une des quelconques revendications précédentes, dans lequel le piston (105) comprend au moins une rainure (203) pour loger un joint d'étanchéité (121).

7. Le canon selon la revendication 6, dans lequel le canon (100) comprend un point de graisse et/ou de colle dans les rainures (203).

8. Le canon (100) selon l'une des quelconques revendications précédentes, dans lequel le nombre de lobes (201) est au moins 2.

9. Le canon (100) selon l'une des quelconques revendications précédentes, dans lequel les lobes (201) ont une forme arrondie, carrée ou triangulaire.

10. Le canon (100) selon l'une des quelconques revendications précédentes, dans lequel le piston (105) est monobloc.

11. Le canon (100) selon l'une des quelconques revendications 1 à 9, dans lequel la base (202) et la paroi (204) sont des pièces différentes.

12. Le canon (100) selon l'une des quelconques revendications précédentes, dans lequel un côté du canon (100) comprend des trous (301) pour recevoir des moyens de fixation (115), et dans lequel la forme et/ou le nombre des lobes (201) est dépendant du nombre et/ou de l'emplacement des trous (301).

## Patentansprüche

1. Spannzange (100) zur Führung eines zu bearbeitenden Materials (101) entlang einer longitudinalen Achse (A) der Spannzange (100), wobei die Spannzange (100) aufweist:
einen Hauptkörper (113),
eine Zangenhalterung (103), die zum Halten und/oder Freigeben des Materials (101) zumindest teilweise in dem Hauptkörper (113) vorgesehen ist, und
einen pneumatischen Kolben (105), der zum Halten und/oder Freigeben des Materials (101) zumindest teilweise in dem Hauptkörper (113) vorgesehen ist, um das Material (101) in der Zangenhalterung (103) pneumatisch zu halten und/oder freizugeben, wobei der Kolben (105) eine Basis (202) und eine radial von der Basis (202) abragende Wand (204) aufweist, wobei die Wand (204) transversal in Bezug auf die longitudinale Achse (A) der Spannzange (100) zwei Kammern (117; 119) separiert, die axial in der Spannzange (100) vorgesehen sind, wobei die Drücke in den beiden Kammern zur Betätigung der Zangenhalterung (103) vorgesehen sind,
**dadurch gekennzeichnet, dass** die Wand (204) eine Form mit einer Vielzahl von Nocken (201) derart aufweist, dass die radiale Dicke der Wand (204) in einer Ebene senkrecht zur longitudinalen Achse nicht konstant ist.

2. Spannzange (100) nach Anspruch 1, wobei die Zangenhalterung (103) eine bikonische Form aufweist.

3. Spannzange (100) nach einem der vorhergehenden Ansprüche, wobei der Kolben (105) durch ein Zwischenstück (107) mit der Zangenhalterung (103) verbunden ist.

4. Spannzange (100) nach einem der vorhergehenden Ansprüche, wobei auf einer Seite der Spannzange (100) Löcher (301) zur Aufnahme von Befestigungsmitteln (115) vorgesehen sind und wobei die zwischen den Löchern (301) gelegenen Nocken (201) derart vorgesehen sind, dass die Nocken (201) radial von der longitudinalen Achse (A) zumindest bis zum Niveau, auf dem die Löcher (301) gelegen sind, abstehen.

5. Spannzange (100) nach einem der Ansprüche 1 - 3, wobei auf einer Seite der Spannzange (100) Löcher (301) zur Aufnahme von Befestigungsmitteln (115) vorgesehen sind und wobei die Nocken (201), angeordnet zwischen zwei Paaren von Löchern (301), derart vorgesehen sind, dass die Nocken (201) radial von der longitudinalen Achse (A) zumindest bis zum Niveau, auf dem die Löcher (301) gelegen sind, abstehen.

6. Spannzange (100) nach einem der vorhergehenden Ansprüche, wobei der Kolben (105) wenigstens eine Rille (203) zur Aufnahme einer Dichtung (121) aufweist.

7. Spannzange (100) nach Anspruch 6, wobei die Spannzange (100) in den Rillen (203) einen Schmier- und/oder Klebepunkt aufweist.

8. Spannzange (100) nach einem der vorhergehenden Ansprüche, wobei die Zahl der Nocken (201) wenigstens zwei beträgt.

9. Spannzange (100) nach einem der vorhergehenden Ansprüche, wobei die Nocken (201) eine runde, viereckige oder dreieckige Form aufweisen.

10. Spannzange (100) nach einem der vorhergehenden Ansprüche, wobei der Kolben (105) einstückig vorgesehen ist.

11. Spannzange (100) nach einem der vorhergehenden Ansprüche 1 bis 9, wobei die Basis (202) und die Wand (204) unterschiedliche Elemente sind.

12. Spannzange (100) nach einem der vorhergehenden Ansprüche, wobei auf einer Seite der Spannzange (100) Löcher (301) zur Aufnahme von Befestigungsmitteln (115) vorgesehen sind und wobei die Form und/oder die Anzahl der Nocken (201) von der Anzahl und/oder der Position der Löcher (301) abhängt.

## Claims

1. An adjustable collet chuck (100) for guiding a material (101) to be machined along a longitudinal axis (A) of the collet chuck (100), the collet chuck (100) comprising:
• a main body (113) ;
• a grip (103) situated at least partially in the main body (113) for clamping and/or unclamping the material (101) ; and
• a pneumatic piston (105) situated at least partially in the main body (113), for clamping and/or unclamping pneumatically the material (101) in the grip (103), the piston (105) comprising a base (202) and a wall (204) extending radially from the base (202), the wall (204) separating transversely, with respect to the longitudinal axis (A) of the collet chuck (100), two chambers (117 ; 119) situated axially in the collet chuck (100), the pressures in the two chambers being used to operate the grip (103),
**characterised in that** the wall (204) is in the shape of a plurality of lobes (201) such that the radial thickness of the wall (204), in a perpendicular plane with respect to the longitudinal axis, is not constant.

2. The collet chuck (100) according to claim 1, wherein the grip (103) is of biconical shape.

3. The collet chuck (100) according to any one of the preceding claims, wherein the piston (105) is connected to the grip (103) by means of an intermediate piece (107).

4. The collet chuck (100) according to any one of the preceding claims, wherein one side of the collet chuck (100) comprises holes (301) for receiving fixing means (115), and wherein the lobes (201) are arranged to be situated between the holes (301) in such a way that the lobes (201) extend radially from the longitudinal axis (A) to at least the level where the holes (301) are located.

5. The collet chuck (100) according to any one of the claims 1-3, wherein one side of the collet chuck (100) comprises holes (301) for receiving fixing means (115), and wherein the lobes (201) are arranged to be located between two pairs of holes (301) in such a way that the lobes (201) extend radially from the longitudinal axis (A) at least to the level where the holes (301) are located.

6. The collet chuck (100) according to any one of the preceding claims wherein the piston (105) comprises at least one groove (203) to accommodate a gasket (121).

7. The collet chuck according to claim 6, wherein the collet chuck (100) comprises a lubricant point and/or adhesive point in the grooves (203).

8. The collet chuck (100) according to any one of the preceding claims wherein the number of lobes (201) is at least 2.

9. The collet chuck (100) according to any one of the preceding claims, wherein the lobes (201) have a round, square or triangular shape.

10. The collet chuck (100) according to any one of the preceding claims, wherein the piston (105) is integral.

11. The collet chuck (100) according to any one of the claims 1 to 9, wherein the base (202) and the wall (204) are different pieces.

12. The collet chuck (100) according to any one of the preceding claims, wherein one side of the collet chuck (100) comprises holes (301) for receiving fixing means (115), and wherein the shape and/or the number of lobes (201) depends on the number and/or the location of holes (301).
